# EUROPÄISCHE PATENTSCHRIFT

(11) **EP 1 884 403 B1**
(45) Veröffentlichungstag und Bekanntmachung des Hinweises auf die Patenterteilung: **09.12.2009**
(21) Anmeldenummer: 06015997.7
(22) Anmeldetag: 01.08.2006
(51) Int. Cl.: B60P 1/44

(54) **Plattform für Hubladebühnen für Kraftfahrzeuge**
Platform for a vehicle tailgate lift
Plate-forme pour hayon d'un véhicule

(43) Veröffentlichungstag der Anmeldung: 06.02.2008
(73) Patentinhaber: Bär, Gerd, 74078 Heilbronn (DE)
(72) Erfinder: Bär, Gerd, 74078 Heilbronn (DE)
(74) Vertreter: Friz, Oliver

(56) Entgegenhaltungen:
- EP-A- 0 383 488
- DE-U1- 20 300 309
- FR-A1- 2 575 709
- FR-A1- 2 704 300
- JP-U- 4 061 151
- US-A1- 2004 134 251

## Beschreibung

Die Erfindung betrifft eine Plattform für Hubladebühnen sowie Hubladebühnen für Kraftfahrzeuge mit einer begehbaren Plattform, die eine Grundstruktur und ein mit der Grundstruktur verbundenes Randabschlussprofil aufweist, welches zumindest einen Teil eines begehbaren Randabschnitts der Plattform bildet.

Plattformen für Hubladebühnen werden heute in Europa zu mehr als 60 % aus Aluminium in der Strangpressprofiltechnik hergestellt. Hierbei besteht die Lauffläche aus quer und/oder längs verlegten Strangpresshohlprofilen. Diese Strangpresshohlprofile haben üblicherweise auf der Laufseite 1,3 bis 2,0 mm hohe Rippen, die der Trittsicherheit und allgemein der Rutschsicherheit auf der Plattform dienen, siehe z.B. EP-A-383488 oder FR-A1-2704300.

Der Grundkörper der Plattform besteht aus diesen fest gefügten Strangpresshohlprofilen mit einem entsprechenden Unterbau zum Anschluss der Hubmechanik der Hubladebühne. Im Randbereich links und rechts in Fahrtrichtung werden diese Strangpresshohlprofile mit einem U-förmigen Randabschlussprofil eingefasst. Das Randabschlussprofil dient häufig und u. a. dazu, die offenen Profile zu schließen und den Plattformrand nicht scharfkantig zu gestalten, sondern mit Radien zu versehen.

Bei Anwendungsfällen, bei denen die Plattform der Hubladebühne den Aufbau des Kraftfahrzeugs verschließt, ist eine Dichtung zwischen Plattform und Aufbau notwendig. Diese ist zweckmäßigerweise am Aufbau vorgesehen. Bei der Plattform bildet das vorgenannte Randabschlussprofil eine glatte Gegenseite für die Dichtung. Wäre hier keine glatte Gegenseite vorhanden, würde die Dichtung sehr schnell verschleißen, denn die Plattform arbeitet während der Fahrt gegenüber dem Aufbau. Außerdem wäre der Aufbau nicht regendicht.

Dies bedeutet aber gleichzeitig, dass man bestrebt war, den Randbereich der Plattform glatt auszubilden; der Randbereich kann daher nicht rutschsicher sein. Dies wirkt sich sehr negativ aus, indem eine hohe Ausrutschgefahr für die Bedienperson besteht, wenn sie gewollt oder ungewollt mit der überwiegenden Fußfläche auf das Randabschlussprofil tritt. Bei Nässe oder wenn schmierfähige Flüssigkeit verschüttet wurde, besteht die Gefahr des Abrutschens und Abstürzens für die Bedienperson.

Das ungewollte Betreten/Berühren des Randabschlussprofils ist naturgemäß bei Plattformen mit quer verlegten Profilen besonders hoch. Kommt die Bedienperson mit einem Fuß nahe am Seitenrand der Plattform ins Rutschen, stellt das glatte Randabschlussprofil mit seiner zur Plattform hin verrundeten Kante keine nennenswerte rutschhemmende Barriere dar.

Das gleiche "Rutschproblem" stellt sich auch für angetriebene und gebremste Gabelhubwagen. Kommt der Hubwagen samt Last durch eine Schrägneigung der Plattform (durch unebenen Stand des LKWs, z. B. am Straßenrand) und/oder durch eine Gewichtsverlagerung ins Rutschen, so stellen bekannte Randabschlussprofile nahezu keine Barrierewirkung dar.

Andere Maßnahmen, wie z. B. die Verwendung eines aufklappbaren oder aufsteckbaren Geländers, erweisen sich als nicht praktikabel. Solche Geländer sind ein großes Hindernis, wenn sie im zusammengeklappten Zustand auf der Plattform angeordnet sind. Dies ist dann der Fall, wenn die Bedienperson die Geländer nicht aufstellt, weil sie nur ein kleines Stückgut aus dem Aufbau holen will. Hier gibt es viele Stolpermöglichkeiten. Eine weitere Gefahr für die Bedienperson besteht, wenn sie zwischen die Last und das Geländer gerät.

Die Rutschgefahr im Randbereich von Plattformen bei Hubladebühnen wurde seither hingenommen. Es ist Aufgabe der Erfindung, dieses Problem auf einfache und wirkungsvolle Weise zu lösen.

Diese Aufgabe wird durch eine Plattform mit den Merkmalen des Anspruchs 1 bzw. mit den Merkmalen des Anspruchs 2 gelöst.. Nach der zweiten Variante der Erfindung sind diese Vorsprünge bei einem vorzugsweise metallischen begehbaren streifenförmigen Abschnitt ausgebildet, der gegen die Grundstruktur und/oder gegen das Randabschussprofil befestigt ist (Anspruch 2). Es wird also Schutz beansprucht für Hubladebühnen und deren Plattformen mit den Merkmalen der unabhängigen Ansprüche 1 und 2.

Plattformen mit einer erfindungsgemäßen Rutschbarriere an den seitlichen begehbaren Randabschnitten verwandeln den bisherigen glatten Plattformrandbereich zu einer trittsicheren Randzone. Insbesondere bei Plattformen mit quer verlegten Strangpresshohlprofilen, bei denen quer zur Fahrtrichtung eine sehr schlechte Rutschhemmung gegeben ist, schützt die erfindungsgemäß ausgebildete Randzone die Bedienperson beim Ausgleiten in einem randnahen Bereich vor dem Absturz.

Plattformen mit der erfindungsgemäßen Rutschbarriere sind ohne weiteres wie bisher seitlich entladbar, auch mit speziellen Randabschlussprofilen. Das Überfahren der Rutschbarriere mit Rollbehältern, Gabel- und Elektrohubwagen ist aufgrund der geringen Höhe der Vorsprünge mit wenig Widerstand und daher problemlos möglich.

Die Rutschbarriere kann dem jeweiligen Bedarfsfall entsprechend von leichtem bis schwerem Einsatz belastbar ausgebildet werden.

Die Rutschbarriere ist außerdem sehr kostengünstig herstellbar. Im Vergleich zu einem Geländer betragen die Kosten nur einen Bruchteil und es wird ein höherer Sicherheitswert erreicht.

Nachder Erfindung weist ein äußerer Bereich des begehbaren Randabschnitts des Randabschlußprofils der Plattform keine rutschverhindernden Vorsprünge auf. Dieser äußere Bereich kann somit mit einer am Aufbau des Kraftfahrzeugs vorgesehenen Dichtung, wie eingangs beschrieben, zusammenwirken. Die rutschverhindernden Vorsprünge liegen etwas weiter innen, damit sie die Elastomerdichtung am Kraftfahrzeug nicht beschädigen, insbesondere bei während der Fahrt auftretenden Relativbewegungen zwischen Plattform und Aufbau. Solchenfalls erweist es sich bei der zweiten Variante der Erfindung (Anspruch 2) als vorteilhaft, wenn der begehbare streifenförmige Abschnitt innerhalb der Anordnung des Randabschlussprofils vorgesehen ist, so dass das Randabschlussprofil einen äußeren Rahmen bildet. Der begehbare streifenförmige Abschnitt ist dabei vorzugsweise im Wesentlichen flächenbündig zu dem Randabschlussprofil angeordnet (wobei sich dies nicht auf die Vorsprünge sondern auf die ebene Oberseite des streifenförmigen Abschnitts bezieht).

Die Verbindung des insbesondere metallischen begehbaren streifenförmigen Abschnitts mit der Grundstruktur oder mit dem Randabschlussprofil ist vorzugsweise eine Vernietung, obschon grundsätzlich eine Schraubverbindung oder eine Schweißverbindung ebenfalls denkbar wäre.

Nach einer besonders bevorzugten Ausführungsform der Erfindung ist der begehbare streifenförmige Abschnitt in eine Oberseite des Randabschlussprofils, vorzugsweise flächenbündig eingesetzt und daran gehalten. Er kann dabei vernietet, verschweißt oder eingepresst oder eingebördelt sein.

Die erwähnte Grundstruktur der Plattform ist in vorteilhafter Weise aus mehreren festgefügten Profilen, insbesondere Strangpresshohlprofilen, gebildet. In diesem Fall dient das Randabschlussprofil nicht nur der Vermeidung scharfer Kanten, sondern auch dazu, die offenen Profile zu schließen.

Das Randabschlussprofil kann in vorteilhafter Weise als Kantteil ausgebildet sein. Dies ermöglicht es in vorteilhafter Weise, die Vorsprünge bei dem Randabschlussprofil bei der Herstellung des Randabschlussprofils aus einem Flachmaterial auszubilden.

Der streifenförmige Abschnitt nach der zweiten Erfindungsvariante kann von einem (von dem Randabschlussprofil separaten) streifenförmigen Flachmaterial oder von einem Winkelprofil gebildet sein. Der streifenförmige Abschnitt schließt sich vorzugsweise im Wesentlichen wenigstens nahezu an das Randabschlussprofil an, so dass eine möglichst geschlossene Trennfuge gebildet wird.

Der streifenförmige Abschnitt hat zweckmäßigerweise eine Breite quer zu seiner Längserstreckung von 20 bis 50 mm.

Der Abstand und die Anordnung der Vorsprünge in dieser rutschverhindernden Zone ist zweckmäßigerweise derart, dass beim Betreten des Randabschnitts der Plattform möglichst mehrere Vorsprünge von der Trittfläche des Benutzers erfasst werden.

Die Vorsprünge sind zweckmäßigerweise so ausgebildet, dass sie sich zur Bildung einer Rutschverhinderung 1 bis 10 mm, insbesondere 1 - 8 mm, insbesondere 1 - 6 mm, insbesondere 1 - 5 mm insbesondere 1 - 4 mm und weiter insbesondere 1 - 3 mm über die Oberfläche des begehbaren Randabschnitts erheben.

Nach einer besonders vorteilhaften Ausführungsform der Erfindung sind die Vorsprünge zur Bildung einer Rutschverhinderung als Durchzüge ausgebildet. Die Durchzüge haben dabei einen Innendurchmesser von 4 bis 5 cm, insbesondere von 5 bis 12 mm.

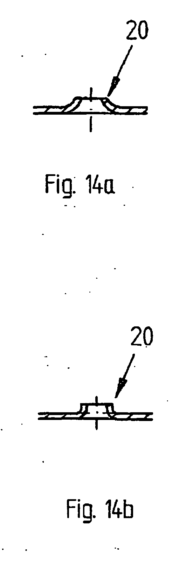

In weiterer Ausbildung dieses Erfindungsgedankens erweist es sich als vorteilhaft, dass die Durchzüge eine Materialverformung bis nahezu 90° zur begehbaren Oberfläche bewirken. Auf diese Weise wird eine walzstabile Ausführungsform der Vorsprünge erreicht (s. Figur 14b und im Vergleich hierzu Figur 14a, die als nicht walzstabil angesehen werden muss).

Anstelle von Durchzügen können auch Ausklinkungen bei dem Randabschlussprofil oder bei dem zusätzlichen streifenförmigen Abschnitt vorgesehen werden.

Es kann sich auch als vorteilhaft erweisen, wenn die Vorsprünge von in Längsrichtung erstreckten Riffeln an dem Randabschlussprofil oder an dem streifenförmigen Abschnitt gebildet sind, indem die Riffeln Aussparungen aufweisen, welche die Vorsprünge begrenzen. Bei den Aussparungen kann es sich um Ausfräsungen handeln.

Weiter kann es sich als vorteilhaft erweisen, wenn die Vorsprünge von einem abgekanteten Bereich eines streifenförmigen Flachmaterials oder von einem Schenkel eines Winkelprofils oder von einem abgekanteten Bereich des Randabschlussprofils selbst gebildet sind. Hier erweist es sich als vorteilhaft, wenn der abgekantete Bereich des streifenförmigen Flachmaterials oder der Schenkel des Winkelprofils oder der abgekantete Bereich des Randabschlussprofils randoffene Ausnehmungen aufweist, welche die Vorsprünge begrenzen. Um Abkantungen möglichst kurz ausbilden zu können, so dass sie sich nur über eine Höhe von ca. 5 bis 10 mm über den begehbaren Randabschnitt erheben, werden die Ausnehmungen bis vor den Beginn des Biegeradius des abgekanteten Bereichs erstreckt.

Bei allen Ausführungsformen der Erfindung sind die Vorsprünge vorzugsweise einstückig mit dem Material des Randabschlussprofils bzw. mit dem Material des steifenförmigen Abschnitts ausgebildet und haben daher eine hohe Stabilität. Es besteht nicht die Gefahr, dass die Vorsprünge durch Beanspruchung abgelöst werden.

Weitere Merkmale, Einzelheiten und Vorteile der Erfindung ergeben sich aus den beigefügten Patentansprüchen und der zeichnerischen Darstellung und nachfolgenden Beschreibung bevorzugter Ausführungsformen der Erfindung. In der Zeichnung zeigt:
- Figur 1: eine Horizontalschnittansicht durch das Heckportal eines Kraftfahrzeugs, welches durch eine Plattform einer Hubladebühne verschlossen ist (nicht erfindungsgemäß);
- Figur 2: eine Schnittansicht senkrecht zur Ebene einer Plattform in einem Randbereich der Plattform nach einer ersten Ausführungsform der Erfindung;
- Figur 3: eine Figur 2 entsprechende Schnittansicht nach einer zweiten Ausführungsform der Erfindung;
- Figur 4: eine Draufsicht auf die Ausführungsform nach Figur 3 in Richtung des Pfeils IV;
- Figur 5: eine Figur 2 entsprechende Schnittansicht nach einer weiteren Ausführungsform mit einem zur begehbaren Seite hin abgekanteten Randabschlussprofil;
- Figur 6: eine Figur 2 entsprechende Schnittansicht einer weiteren Ausführungsform der Erfindung mit einem streifenförmigen Winkelprofil;
- Figur 7: eine Figur 2 entsprechende Schnittansicht einer weiteren Ausführungsform der Erfindung mit einem streifenförmigen U-förmigen Winkelprofil;
- Figuren 8a, b: Details der Ausführungsformen nach Figuren 6 und 7;
- Figur 9: eine Figur 2 entsprechende Schnittansicht einer nicht erfindungsgemäßen Plattform, die hinter einer den Aufbau verschließenden Tür des Kraftfahrzeugs angeordnet werden, also selbst keine Dichtfunktion ausübt, und
- Figur 10: eine Figur 2 entsprechende Schnittansicht nach einer weiteren Ausführungsform der Erfindung mit Durchzügen am Randabschlussprofil;
- Figur 11: eine perspektivische Ansicht der Ausführungsform nach Figur 10;
- Figur 12: eine Figur 2 entsprechende Schnittansicht nach einer weiteren Ausführungsform der Erfindung mit Vorsprüngen am Randabschlussprofil;
- Figur 13: eine perspektivische Ansicht der Ausführungsform nach Figur 12;
- Figuren 14 a, b: eine Skizze eines nicht walzstabil und einer walzstabil ausgebildeten Vorsprungs in Form eines Durchzugs.

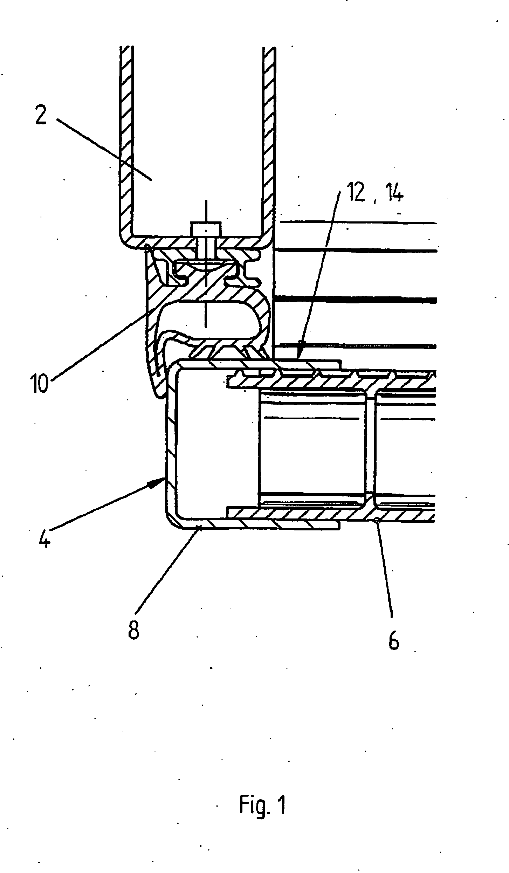

Figur 1 zeigt eine Horizontalschnittansicht durch den Bereich eines Heckportals eines angedeuteten Aufbaus 2 eines Kraftfahrzeugs, wobei der Aufbau 2 durch eine Plattform 4 einer Hubladebühne verschlossen ist. Die Plattform 4 umfasst in an sich bekannter Weise eine Anzahl von Hohlprofilen 6 und an den Längsseiten je ein Randabschlussprofil 8, welches die Längsseiten der Plattform 4 abschließt und vor scharfen Kanten schützt. Die Plattform liegt über eine Elastomerdichtung 10 dichtend gegen den Aufbau 2 an. Die Dichtung 10 ist am Aufbau 2 gehalten. Das Randabschlussprofil 8 bildet zur begehbaren Plattformseite 12 hin eine glatte Oberfläche 14, mit dem es gegen die Dichtung 10 anliegt.

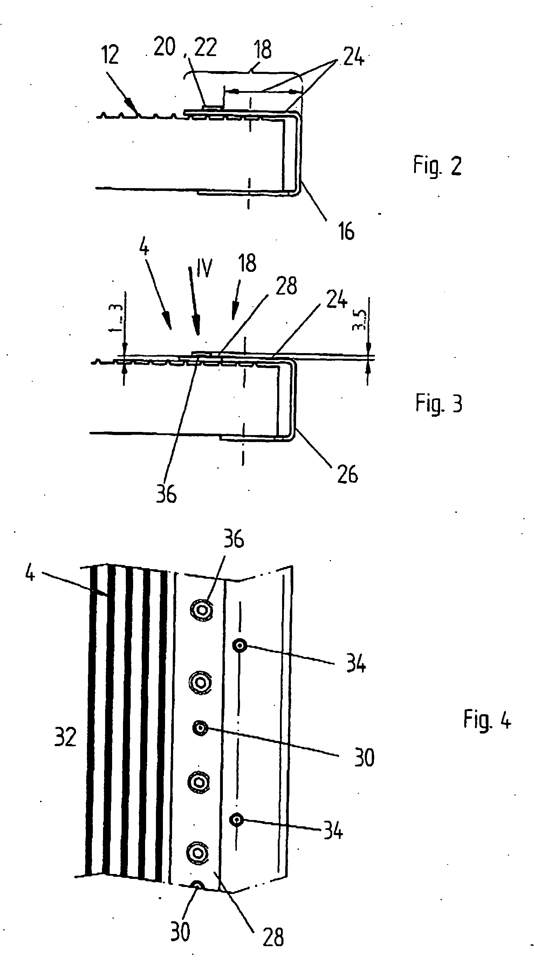

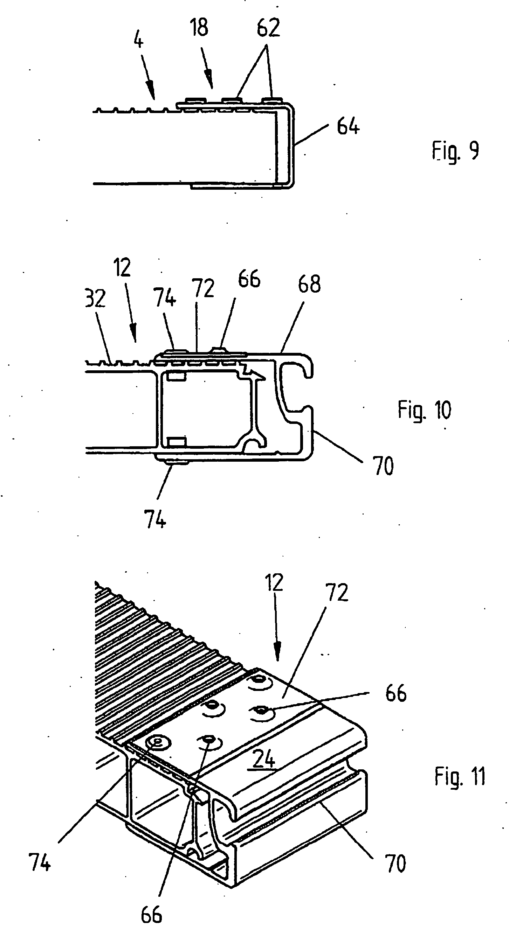

Figur 2 zeigt eine Plattform 4 mit einem vorteilhafterweise als Kantteil ausgebildeten Randabschlussprofil 16, welches einen begehbaren Randabschnitt 18 der Plattform 4 bildet. In diesem begehbaren Randabschnitt 18 sind als Durchzüge 20 ausgebildete Vorsprünge 22 vorgesehen, die sich zur begehbaren Plattformseite 12 hin erstrecken und eine Rutschverhinderung bilden, also einen verbesserten Grip auf der begehbaren Plattformseite 12 bereitstellen. Im dargestellten Fall der Figur 2 sind senkrecht zur Zeichnungsebene hintereinander eine Vielzahl von solchen Vorsprüngen 22 vorgesehen, so dass ein Benutzer, wenn er den Randabschnitt 18 betritt, stets im Kontakt mit vorzugsweise mehreren solcher Vorsprünge ist. Hierdurch wird die Rutschgefahr erheblich reduziert. Auch wenn ein Benutzer in einem gewissen Abstand vom Längsrand der Plattform 4 ausgleitet und quer zur Längsrichtung des Kraftfahrzeugs gleitet, so stellen die Vorsprünge 22 eine Barriere dar, mit deren Hilfe der Benutzer wieder Tritt finden kann. Die Rutschgefahr im Randbereich 18 der Plattform 4 wird hierdurch wirksam reduziert. In einem äußeren Bereich 24 des begehbaren Randabschnitts 18 des Randabschlussprofils 16 sind im beispielhaft dargestellten Fall hingegen keine Vorsprünge vorgesehen, damit die Plattform 4 mit diesem Bereich 24 dichtend gegen die Elastomerdichtung 10 des Aufbaus 2 eines Kraftfahrzeugs anliegen kann. Sofern es sich bei der erfindungsgemäßen Hubladebühne um eine solche handelt, welche in Fahrstellung hinter einer den Aufbau verschließenden Tür oder unterhalb des Aufbaus positioniert wird, so kann es sich als vorteilhaft erweisen, wenn die Vorsprünge 18 im Wesentlichen über den gesamten begehbaren Randabschnitt 18 des Randabschlussprofils 16 angeordnet sind (so wie in Figur 9 dargestellt).

Die Figuren 3 und 4 zeigen eine weitere Ausführungsform der Erfindung. Danach ist parallel zu einem Randabschlussprofil 26 ein metallischer begehbarer streifenförmiger Abschnitt 28 vorgesehen, der über Nieten 30 mit einer Grundstruktur 32 der Plattform 4 verbunden ist. Figur 4 zeigt auch Nieten 34, mittels derer das Randabschlussprofil 26 mit der Grundstruktur 32 verbunden ist. Bei dieser Ausführungsform sind rutschverhindernde Vorsprünge 36 aus dem den streifenförmigen Abschnitt 28 bildenden Flachmaterial gebildet. Die Vorsprünge 36 sind wiederum als Durchzüge ausgebildet. Der von dem Randabschlussprofil 26 gebildete äußere Bereich 24 des begehbaren Randabschnitts 18 weist wie bei der Ausführungsform nach Figur 2 keine Vorsprünge auf und kann daher mit einer Elastomerdichtung des Aufbaus des Kraftfahrzeugs zusammenwirken.

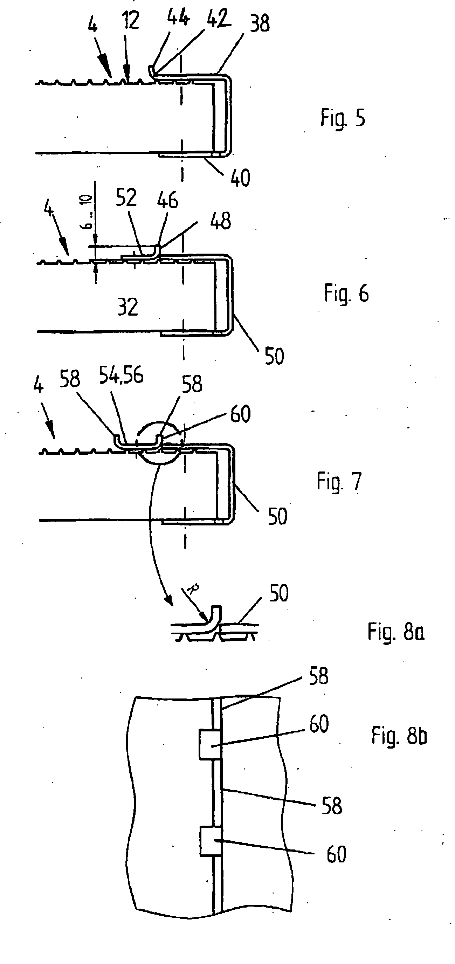

Bei der Ausführungsform nach Figur 5 ist ein auf der begehbaren Plattformseite 12 liegender Schenkel 38 eines Randabschlussprofils 40 nach oben abgekantet. Am freien Ende des Schenkels 38 sind randoffene Ausnehmungen 42 vorgesehen, zwischen denen durch die Abkantung nach oben erstreckte Vorsprünge 44 gebildet oder begrenzt werden, die eine Rutschverhinderung bewirken.

Bei der Ausführungsform nach Figur 6 sind entsprechende Vorsprünge 46 zwischen Ausnehmungen 48 gebildet, jedoch nicht bei dem Randabschlussprofil 50, sondern bei einem parallel hierzu erstreckten streifenförmigen Abschnitt 52, der wiederum wie gemäß Figur 4 mit der Grundstruktur 32 der Plattform 4 verbunden ist.

Bei der Ausführungsform nach Figur 7 ist ein streifenförmiger Abschnitt 54 aus einem U-förmigen Winkelprofil 56 verwendet, das vorzugsweise ebenfalls durch Abkantung aus einem Flachmaterial hergestellt wurde, und zwei Reihen hintereinander angeordneter Vorsprünge 58 aufweist. Die Vorsprünge 58 sind wiederum durch Ausnehmungen 60 begrenzt. Die Figuren 8a und 8b zeigen anhand einer Teildarstellung von Figur 7 die Ausbildung der rutschverhindernden Vorsprünge. Die Ausnehmungen 60 erstrecken sich bis hinter den in die Ebene projizierten Biegeradius R der Abkantung. Auf diese Weise sind Vorsprünge mit verhältnismäßig geringem Überstand über die begehbare Plattformseite 12 im Bereich von nur 5 bis 10 mm herstellbar.

Figur 9 zeigt eine Ausführungsform der Erfindung, die vorzugsweise verwendbar ist bei Hubladebühnen, deren Plattform den Aufbau eines Kraftfahrzeugs nicht unmittelbar verschließen, also keine dichtende Anlage hiergegen ausbilden, sondern in Fahrstellung hinter einer den Laderaum verschließenden Tür oder als faltbare oder unterfahrbare Plattform unterhalb des Aufbaus des Kraftfahrzeugs untergebracht sind. Bei diesen Hubladebühnen kann es sich als vorteilhaft erweisen, Vorsprünge 62 auch in einem bis nach ganz außen erstreckten Bereich eines Randabschlussprofils 64 vorzusehen, da hier ja nicht die Gefahr besteht, dass die Vorsprünge 62 eine Elastomerdichtung am Aufbau beschädigen.

Die Figuren 10 und 11 zeigen eine weitere Ausführungsform, bei der rutschverhindernde Vorsprünge 66 in Form von Durchzügen an einem auf der begehbaren Plattformseite 12 angeordneten Schenkel 68 eines Randabschlussprofils 70 vorgesehen sind. Die Vorsprünge 66 sind jedoch nicht aus dem Material des Randabschlussprofils 70 herausgeformt, sondern aus einem vorzugsweise aus Edelstahl bestehenden streifenförmigen Abschnitt 72, der vorzugsweise im Wesentlichen flächenbündig in die Oberseite des Schenkels 68 eingesetzt ist. Im beispielhaft dargestellten Fall ist der streifenförmige Abschnitt 72 über Befestigungsmittel in Form von Nieten 74 mit dem Schenkel 68 des Randabschlussprofils 70 und beispielhaft auch mit der Grundstruktur 32 der Plattform verbunden. Es kann sich hierbei vorzugsweise um dieselben Befestigungsmittel in Form von Nieten 74 handeln, mittels derer auch das Randabschlussprofil 70 an der Grundstruktur 32 befestigt ist.

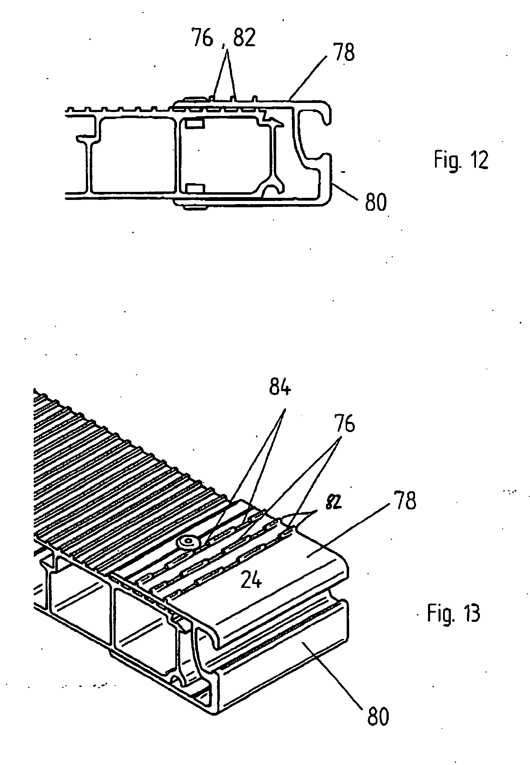

Figuren 12 und 13 zeigen eine den Figuren 10 und 11 ähnliche Ausführungsform. Wiederum sind Vorsprünge 76 an einem oberen Schenkel 78 eines Randabschlussprofils 80 vorgesehen. Sie sind in diesem Fall einstückig mit dem Material des Schenkels 78 des Randabschlussprofils 80 ausgebildet und vorzugsweise ausgehend von in Längsrichtung erstreckten Riffeln 82 gebildet, indem vorzugsweise durch Querfräsung Aussparungen 84 in diese Riffeln 82 eingebracht wurden, welche die Vorsprünge 76 begrenzen.

Bei den Ausführungsformen gemäß Figuren 10, 11 bzw. 12, 13 ist ein äußerer Bereich 24 frei von Vorsprüngen gehalten und dient der Abdichtung der Plattform gegen den Aufbau des Kraftfahrzeugs. Es wird jedoch ausdrücklich darauf hingewiesen, dass insbesondere bei Hubladebühnen, deren Plattform hinter einer den Aufbau verschließenden Tür oder unterhalb des Aufbaus des Kraftfahrzeugs angeordnet wird, die rutschverhindernden Vorsprünge über den gesamten Randabschnitt vorgesehen werden können.

Schließlich zeigen Figuren 14a und 14b eine nicht walzstabile Ausführungsform (Figur 14a) und eine walzstabile Ausführungsform (Figur 104) eines Durchzugs 20.

## Patentansprüche

1. Plattform für Hubladebühnen für Kraftfahrzeuge mit einer begehbaren Plattform (4) zum Verschließen eines Aufbaus eine Kraftfahrzeugs, die eine Grundstruktur (32) und ein mit der Grundstruktur verbundenes Randabschlussprofil (8, 16, 26, 40, 50, 64, 70, 80) aufweist, welches zumindest einen Teil eines begehbaren Randabschnitts (18) der Plattform (4) bildet, **dadurch gekennzeichnet, dass** das Randabschlussprofil (40, 64, 70, 80) zur begehbaren Seite (12) sich erhebende Vorsprünge (44, 62) zur Bildung einer Rutschverhinderung aufweist, wobei ein äußerer Bereich (24) des begehbaren Randabschnitts (18) des Randabschlussprofils der Plattform (4) keine rutschverhindernden Vorsprünge aufweist, so dass die Plattform (4) mit diesem äußeren Bereich (24) dichtend gegen eine Elastomerdichtung (10) des Aufbaus (2) des Kraftfahrzeugs anliegen kann.

2. Plattform für Hubladebühnen für Kraftfahrzeuge mit einer begehbaren Plattform (4) zum Verschließen eines Aufbaus eine Kraftfahrzeugs, die eine Grundstruktur (32) und ein mit der Grundstruktur verbundenes Randabschlussprofil (8, 16, 26, 40, 50, 64) aufweist, welches zumindest einen Teil eines begehbaren Randabschnitts (18) der Plattform (4) bildet, **dadurch gekennzeichnet, dass** parallel zu dem Randabschlussprofil (8, 16, 26, 50, 70) ein insbesondere metallischer begehbarer streifenförmiger Abschnitt (28, 52, 54, 72) vorgesehen ist, der gegen die Grundstruktur (32) und/oder gegen das Randabschlussprofil (8, 16, 26, 50, 70) befestigt ist und aus der Streifenebene und zur begehbaren Seite sich erhebende Vorsprünge (22, 36, 46, 58, 66) zur Bildung einer Rutschverhinderung aufweist, wobei ein äußerer Bereich (24) des begehbaren Randabschnitts (18) des Randabschlussprofils der Plattform (4) keine rutschverhindernden Vorsprünge aufweist, so dass die Plattform (4) mit diesem äußeren Bereich (24) dichtend gegen eine Elastomerdichtung (10) des Aufbaus (2) des Kraftfahrzeugs anliegen kann.

3. Plattform nach Anspruch 2, **dadurch gekennzeichnet, dass** die Vorsprünge (22, 36, 46, 58, 66) aus dem Material des streifenförmigen Abschnitts (28, 52, 54, 72) gebildet sind.

4. Plattform nach Anspruch 2 oder 3, **dadurch gekennzeichnet, dass** der begehbare streifenförmige Abschnitt (28, 52, 54) innerhalb der Anordnung des Randabschlussprofils (8, 16, 26, 50) vorgesehen ist.

5. Plattform nach einem der Ansprüche 2 - 4, **dadurch gekennzeichnet, dass** der begehbare streifenförmige Abschnitt (72) in eine Oberseite des Randabschlussprofils (70), vorzugsweise flächenbündig eingesetzt ist.

6. Plattform nach einem der Ansprüche 2 - 5, **dadurch gekennzeichnet, dass** der begehbare streifenförmige Abschnitt (28, 52, 54, 72) mit der Grundstruktur (32) oder mit dem Randabschlussprofil (8, 16, 26, 40, 50, 64, 70) vernietet ist.

7. Plattform nach einem oder mehreren der vorstehenden Ansprüche, **dadurch gekennzeichnet, dass** die Grundstruktur (32) aus mehreren festgefügten Profilen, insbesondere Strangpresshohlprofilen (6), gebildet ist.

8. Plattform nach einem oder mehreren der vorstehenden Ansprüche, **dadurch gekennzeichnet, dass** das Randabschlussprofil (8, 16, 26, 40, 50, 64) ein Kantteil ist.

9. Plattform nach einem oder mehreren der Ansprüche 2-8, **dadurch gekennzeichnet, dass** der streifenförmige Abschnitt (28, 52, 54, 72) von einem streifenförmigen Flachmaterial oder von einem Winkelprofil (56) gebildet ist.

10. Plattform nach einem oder mehreren der Ansprüche 2-9, **dadurch gekennzeichnet, dass** sich der streifenförmige Abschnitt (28, 52, 54, 72) im wesentlichen wenigstens nahezu an das Randabschlussprofil (26, 50, 70) anschließt.

11. Plattform nach einem oder mehreren der Ansprüche 2-10, **dadurch gekennzeichnet, dass** der streifenförmige Abschnitt (28, 52, 54, 72) eine Breite von 20 - 50 mm aufweist.

12. Plattform nach einem oder mehreren der vorstehenden Ansprüche, **dadurch gekennzeichnet, dass** die Vorsprünge (22, 36, 44, 46, 58, 62, 66, 76) zur Bildung einer Rutschverhinderung sich 1 - 10 mm insbesondere 1 - 8 mm, insbesondere 1 - 6 mm, insbesondere 1 - 5 mm insbesondere 1 - 4 mm und weiter insbesondere 1 - 3 mm über die Oberfläche des begehbaren Randabschnitts (18) erheben.

13. Plattform nach einem oder mehreren der vorstehenden Ansprüche, **dadurch gekennzeichnet, dass** die Vorsprünge (22, 36, 62, 66) zur Bildung einer Rutschverhinderung als Durchzüge (20) ausgebildet sind.

14. Plattform nach Anspruch 13, **dadurch gekennzeichnet, dass** die Durchzüge (20) einen Innendurchmesser von 4 - 15 mm, insbesondere von 5 - 12 mm aufweisen.

15. Plattform nach Anspruch 13 oder 14, **dadurch gekennzeichnet, dass** die Durchzüge (20) eine Materialverformung bis nahezu 90° bewirken.

16. Plattform nach einem oder mehreren der vorstehenden Ansprüche, **dadurch gekennzeichnet, dass** die Vorsprünge von in Längsrichtung erstreckten Riffeln (82) an dem Randabschlussprofil (80) oder an dem streifenförmigen Abschnitt gebildet sind, indem die Riffeln (82) Aussparungen (84) aufweisen, welche die Vorsprünge begrenzen.

17. Plattform nach Anspruch 16, **dadurch gekennzeichnet, dass** es sich bei den Aussparungen (84) um Ausfräsungen handelt.

18. Plattform nach einem oder mehreren der vorstehenden Ansprüche, **dadurch gekennzeichnet, dass** die Vorsprünge (44, 46, 58) von einem abgekanteten Bereich eines streifenförmigen Flachmaterials oder von einem Schenkel eines Winkelprofils (56) oder von einem abgekanteten Bereich des Randabschlussprofils (40) gebildet sind.

19. Plattform nach Anspruch 18, **dadurch gekennzeichnet, dass** der abgekantete Bereich des streifenförmigen Flachmaterials oder der Schenkel des Winkelprofils oder der abgekantete Bereich des Randabschlussprofils randoffene Ausnehmungen (42, 48, 60) aufweist, welche die Vorsprünge (44, 46, 58) begrenzen.

20. Plattform nach Anspruch 19, **dadurch gekennzeichnet, dass** die Ausnehmungen (42, 48, 60) bis vor den Beginn des Biegeradius des abgekanteten Bereichs erstreckt sind.

21. Hubladebühne mit einer Plattform nach einem oder mehreren der vorstehenden Ansprüche.

## Claims

1. A platform for tailgate lifts of motor vehicles, having a walkable platform (4) for closing off a superstructure of a motor vehicle, and having a base structure (32) and a profiled edge closure (8, 16, 26, 40, 50, 64, 70, 80) which constitutes at least a portion of a walkable edge section (18) of the platform (4), **characterized in that** the profiled edge closure (40, 64, 70, 80) has protrusions (44, 62) rising toward the walkable side (12) for forming a sliding-prevention device, wherein an outer area (24) of the walkable edge section (18) of the profiled edge closure of the platform (4) does not have any sliding-prevention protrusions, so that the platform (4) can rest in a sealing manner with this outer area (24) against an elastomeric seal of the superstructure (2) of the motor vehicle.

2. A platform for tailgate lifts of motor vehicles, having a walkable platform (4) for closing off a superstructure of a motor vehicle, and having a base structure (32) and a profiled edge closure (8, 16, 26, 40, 50, 64, 70, 80), which constitutes at least a portion of a walkable edge section (18) of the platform (4), **characterized in that**, parallel with the profiled edge closure (8, 16, 26, 50, 70), a walkable strip-shaped section (28, 52, 54, 72), in particular made of metal, is provided, which is fastened on the base structure (32) and/or on the profiled edge closure (8, 16, 26, 50, 70) and has protrusions (22, 36, 46, 58, 66), which rise out of the strip section toward the walkable side for forming a sliding-prevention device, wherein an outer area (24) of the walkable edge section (18) of the profiled edge closure of the platform (4) does not have any sliding-prevention protrusions, so that the platform (4) can rest in a sealing manner with this outer area (24) against an elastomeric seal of the superstructure (2) of the motor vehicle.

3. The platform in accordance with claim 2, **characterized in that** the protrusions (22, 36, 46, 58, 66) are made of the material of the strip-shaped section (28, 52, 54, 72).

4. The platform in accordance with claim 2 or 3, **characterized in that** the walkable strip-shaped section (28, 52, 54, 72) is provided within the arrangement of the profiled edge closure (8, 16, 26, 50).

5. The platform in accordance with one of claims 2 to 4, **characterized in that** the walkable strip-shaped section (28, 52, 54, 72) has been inserted into an upper side of the profiled edge closure (70), preferably flush with the surface.

6. The platform in accordance with one of claims 2 to 5, **characterized in that** the walkable strip-shaped section (28, 52, 54, 72) has been riveted together with the base structure (32) of with the profiled edge closure (8, 16, 26, 40, 50, 64, 70).

7. The platform in accordance with one or several of the preceding claims, **characterized in that** the base structure (32) has been formed from several fixedly joined profiled pieces, in particular hollow, extruded profiled pieces (6).

8. The platform in accordance with one or several of the preceding claims, **characterized in that** the profiled edge closure (8, 16, 26, 40, 50, 64) is an edge element.

9. The platform in accordance with one or several of claims 2 to 8, **characterized in that** the strip-shaped section (28, 52, 54, 72) is formed by a strip-shaped flat material or by an angled profiled element (56).

10. The platform in accordance with one or several of claims 2 to 9, **characterized in that** the strip-shaped section (28, 52, 54, 72) essentially approximately adjoins the profiled edge closure (26, 50, 70).

11. The platform in accordance with one or several of claims 2 to 10, **characterized in that** the strip-shaped section (28, 52, 54, 72) has a width of 20 to 50 mm.

12. The platform in accordance with one or several of the preceding claims, **characterized in that** the protrusions (22, 36, 44, 46, 58, 62, 66, 76) for forming a sliding-prevention device rise by 1 to 10 mm, in particular 1 to 8 mm, in particular 1 to 6 mm, in particular 1 to 4 mm, and furthermore in particular 1 to 3 mm above the surface of the walkable edge section (18).

13. The platform in accordance with one or several of the preceding claims, **characterized in that** the protrusions (22, 36, 62, 66) for forming a sliding-prevention device are embodied as girders (20).

14. The platform in accordance with claim 13, **characterized in that** the girders (20) have an interior diameter of 4 to 15 mm, in particular 5 to 12 mm.

15. The platform in accordance with claim 13 or 14, **characterized in that** the girders (20) cause a deformation of the material up to almost 90°.

16. The platform in accordance with one or several of the preceding claims, **characterized in that** the protrusions (76) are formed by flutes (82), extending in the longitudinal direction on the profiled edge closure (80), or on the strip-shaped section, **in that** the flutes (82) have recesses (84), which delimit the protrusions.

17. The platform in accordance with claim 16, **characterized in that** the recesses (84) are provided by routing.

18. The platform in accordance with one or several of the preceding claims, **characterized in that** the protrusions (44, 46, 58) are formed by a beveled area of a strip-shaped flat material, or by a leg of an angled profiled element (56), or by a beveled area of the profiled edge closure (40).

19. The platform in accordance with claim 18, **characterized in that** the beveled area of a strip-shaped flat material, or the leg of the angled profiled element, or the beveled area of the profiled edge closure have recesses (42, 48, 60), open at the edge, which delimit the protrusions (44, 46, 58).

20. The platform in accordance with claim 19, **characterized in that** the protrusions (44, 46, 58) extend as far as the start of the bending radius of the beveled area.

21. A tailgate lift with a platform in accordance with one or several of the preceding claims.

## Revendications

1. Plateforme pour hayons élévateurs de chargement destinés à des véhicules à moteur comprenant une plateforme (4) sur laquelle il est possible de marcher et permettant de fermer la caisse ou carrosserie d'un véhicule à moteur, et qui présente une structure de base (32) et un profilé terminal de bordure (8, 16, 26, 40, 50, 64, 70, 80) relié à la structure de base et formant au moins une partie d'un tronçon de bordure (18) de la plate-forme (4), sur lequel il est possible de marcher, **caractérisée en ce que** le profilé terminal de bordure (40, 64, 70, 80) présente des protubérances (44, 62) s'élevant en direction du côté (12) où l'on peut marcher, en vue de former un système antidérapant, et une zone extérieure (24) du tronçon de bordure (18) du profilé terminal de bordure de la plateforme (4), sur lequel on peut marcher, ne présente pas de protubérances antidérapantes, de sorte que la plateforme (4) peut venir, avec cette zone extérieure (24), s'appuyer de manière étanche contre un joint d'étanchéité (10) en élastomère de la caisse (2) du véhicule à moteur.

2. Plateforme pour hayons élévateurs de chargement destinés à des véhicules à moteur comprenant une plateforme (4) sur laquelle il est possible de marcher et permettant de fermer la caisse ou carrosserie d'un véhicule à moteur, et qui présente une structure de base (32) et un profilé terminal de bordure (8, 16, 26, 40, 50, 64) relié à la structure de base et formant au moins une partie d'un tronçon de bordure (18) de la plate-forme (4), sur lequel il est possible de marcher, **caractérisée en ce que** parallèlement au profilé terminal de bordure (8, 16, 26, 50, 70), il est prévu un tronçon en forme de bande (28, 52, 54, 72), notamment métallique, sur lequel on peut marcher, qui est fixé contre la structure de base (32) et/ou contre le profilé terminal de bordure (8, 16, 26, 50, 70), et présente des protubérances (22, 36, 46, 58, 66) s'élevant hors du plan de la bande en direction du côté où l'on peut marcher, en vue de former un système antidérapant, et une zone extérieure (24) du tronçon de bordure (18) du profilé terminal de bordure de la plateforme (4), sur lequel on peut marcher, ne présente pas de protubérances antidérapantes, de sorte que la plateforme (4) peut venir, avec cette zone extérieure (24), s'appuyer de manière étanche contre un joint d'étanchéité (10) en élastomère de la caisse (2) du véhicule à moteur.

3. Plateforme selon la revendication 2, **caractérisée en ce que** les protubérances (22, 36, 46, 58, 66) sont formées par le matériau du tronçon en forme de bande (28, 52, 54, 72).

4. Plateforme selon la revendication 2 ou la revendication 3, **caractérisée en ce que** le tronçon en forme de bande (28, 52, 54) sur lequel il est possible de marcher, est prévu à l'intérieur de l'agencement du profilé terminal de bordure (8, 16, 26, 50).

5. Plateforme selon l'une des revendications 2 - 4, **caractérisée en ce que** le tronçon en forme de bande (72) sur lequel il est possible de marcher, est encastré dans un côté supérieur du profilé terminal de bordure (70), de préférence avec sa surface arrivant au ras de la surface de ce dernier.

6. Plateforme selon l'une des revendications 2 - 5, **caractérisée en ce que** le tronçon en forme de bande (28, 52, 54, 72) sur lequel il est possible de marcher, est assemblé par rivetage avec la structure de base (32) ou avec le profilé terminal de bordure (8, 16, 26, 40, 50, 64, 70).

7. Plateforme selon l'une ou plusieurs des revendications précédentes, **caractérisée en ce que** la structure de base (32) est formée de plusieurs profilés jointés de manière fixe, notamment des profilés creux extrudés (6).

8. Plateforme selon l'une ou plusieurs des revendications précédentes, **caractérisée en ce que** le profilé terminal de bordure (8, 16, 26, 40, 50, 64) est une pièce de pliage.

9. Plateforme selon l'une ou plusieurs des revendications 2 - 8, **caractérisée en ce que** le tronçon en forme de bande (28, 52, 54, 72) est formé par un matériau plat en forme de bande ou par un profilé en cornière (56).

10. Plateforme selon l'une ou plusieurs des revendications 2 - 9, **caractérisée en ce que** le tronçon en forme de bande (28, 52, 54, 72) se raccorde sensiblement au moins approximativement au profilé terminal de bordure (26, 50, 70).

11. Plateforme selon l'une ou plusieurs des revendications 2 - 10, **caractérisée en ce que** le tronçon en forme de bande (28, 52, 54, 72) présente une largeur de 20 - 50 mm.

12. Plateforme selon l'une ou plusieurs des revendications précédentes, **caractérisée en ce que** les protubérances (22, 36, 44, 46, 58, 62, 66, 76) destinées à former un système antidérapant, s'élèvent de 1-10 mm, notamment de 1-8 mm, en particulier de 1-6 mm, plus particulièrement de 1-5 mm, notamment de 1-4 mm et en outre plus particulièrement de 1-3 mm au-dessus de la surface du tronçon de bordure (18) sur lequel on peut marcher.

13. Plateforme selon l'une ou plusieurs des revendications précédentes, **caractérisée en ce que** les protubérances (22, 36, 62, 66) destinées à former un système antidérapant, sont réalisées en tant que perforations de soyage (20).

14. Plateforme selon la revendication 13, **caractérisée en ce que** les perforations de soyage (20) présentent un diamètre intérieur de 4-15 mm, notamment de 5-12 mm.

15. Plateforme selon la revendication 13 ou la revendication 14, **caractérisée en ce que** les perforations de soyage (20) produisent une déformation de matière jusqu'à pratiquement 90°.

16. Plateforme selon l'une ou plusieurs des revendications précédentes, **caractérisée en ce que** les protubérances (76) sont formées par des cannelures (82) s'étendant dans la direction longitudinale sur le profilé terminal de bordure (80) ou sur le tronçon en forme de bande, les cannelures (82) présentant des évidements (84) qui délimitent les protubérances.

17. Plateforme selon la revendication 16, **caractérisée en ce que** lesdits évidements (84) sont constitués par des évidements de fraisage.

18. Plateforme selon l'une ou plusieurs des revendications précédentes, **caractérisée en ce que** les protubérances (44, 46, 58) sont formées par une zone recourbée par pliage d'un matériau plat en forme de bande, ou par une aile d'un profilé en cornière (56) ou bien encore par une zone recourbée par pliage du profilé terminal de bordure (40).

19. Plateforme selon la revendication 18, **caractérisée en ce que** la zone recourbée par pliage du matériau plat en forme de bande, ou l'aile du profilé en cornière, ou bien encore la zone recourbée par pliage du profilé terminal de bordure, présente des encoches (42, 48, 60) ouvertes vers le bord, qui délimitent les protubérances (44, 46, 58).

20. Plateforme selon la revendication 19, **caractérisée en ce que** les encoches (42, 48, 60) s'étendent jusqu'avant le début du rayon de courbure de la zone recourbée par pliage.

21. Hayon élévateur de chargement comprenant une plateforme selon l'une ou plusieurs des revendications précédentes.
